(19) Europäisches Patentamt
European Patent Office
Office européen des brevets

(11) **EP 2 423 053 A2**

(12) **EUROPEAN PATENT APPLICATION**
published in accordance with Art. 153(4) EPC

(43) Date of publication:
**29.02.2012 Bulletin 2012/09**

(51) Int Cl.:
***B60R 21/16*** *(2006.01)* ***B60R 21/213*** *(2011.01)*
***B60R 21/20*** *(2011.01)*

(21) Application number: **10767330.3**

(22) Date of filing: **23.04.2010**

(86) International application number:
**PCT/KR2010/002569**

(87) International publication number:
**WO 2010/123316 (28.10.2010 Gazette 2010/43)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.04.2009 KR 20090035991**

(71) Applicant: **Kolon Industries, Inc.**
**Kyungki-do 427-709 (KR)**

(72) Inventors:
• **BAE, In-Gik**
**Gyeongsan-si**
**Gyeongsangbuk-do 712-833 (KR)**
• **HONG, Sung-Gyun**
**Gyeongsan-si**
**Gyeongsangbuk-do 712-833 (KR)**

(74) Representative: **TER MEER - STEINMEISTER & PARTNER GbR**
**Mauerkircherstraße 45**
**DE-81679 München (DE)**

(54) **TUBE-SHAPED FABRIC MEMBER FOR AIRBAG GAS INJECTION, AND A PRODUCTION METHOD FOR THE SAME**

(57)    The present invention relates to a fabric member for injecting an inflation gas into an airbag cushion when an airbag operates. Particularly, the present invention relates to a tube-type fabric substrate for injecting gas, including a tube-type fabric layer at which one or more gas discharge ports are formed, wherein the fabric layer is formed of a weave selected from the group consisting of a double-layered fabric weave, a basket weave, a co-woven fabric weave, a partial co-woven fabric weave, and a mixed weave thereof, and the weight per area of the fabric layer is 10 g/mm$^2$ or less. The present invention also relates to a method of preparing the same, and an airbag system including the same.

Fig. 2

**Description**

**BACKGROUND OF THE INVENTION**

**(a) Field of the Invention**

The present invention relates to a tube-type fabric substrate for introducing gas into an airbag, which is installed in an airbag module and helps the inflator spread uniformly in a cushion when the airbag operates, and thus can improve the performance of the airbag and the safety. The present invention also relates to a method of preparing the same and an airbag system including the same.

**(b) Description of the Related Art**

Generally, an airbag is an apparatus for protecting a driver and passengers by providing a gas into the airbag by exploding gunpowder so as to inflate the airbag after detecting a crash impact with an impact detecting sensor, when a driving car collides head-on or side-on at a speed of about 40 km/h or more.

Recently, as interest in safety of occupants has been rising along with functionality and convenience of a car, the current trend is an increase in the importance of safety devices that can protect the occupants in a car accident. Among the safety devices, the airbag system is particularly used in company with a seat belt, and functions to prevent the occupants from being injured when a car collides head-on or side-on. Furthermore, among the airbag systems, an airbag system particularly related to the side collision of a car is generally separately used as a curtain airbag for protecting the head part of the occupants and a side airbag for protecting side part of the occupants. Here, the curtain airbag generally has a structure which is installed along the interior upper side of a car and is unfolded like a curtain when a car collides, and the side airbag is installed in the door or the side of the seat and prevents the side part of the occupants from being injured due to direct bumping against the car body, including the door.

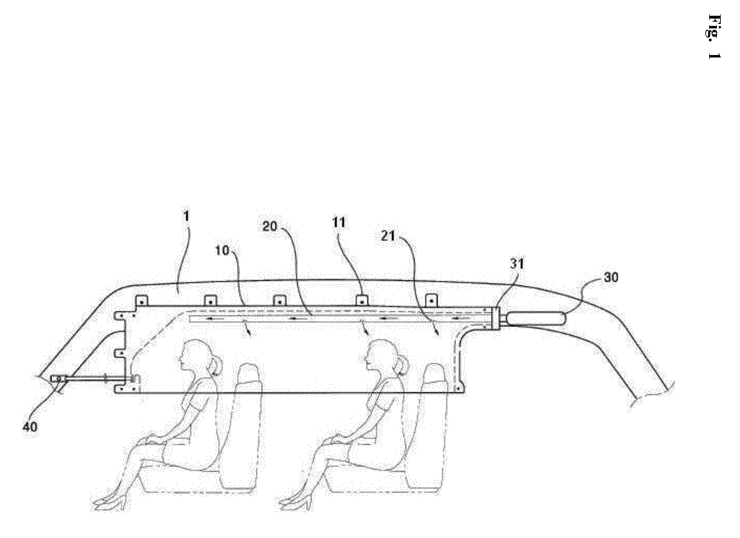

Meanwhile, Fig. 1 is a drawing schematically showing a structure of a conventional curtain airbag. As shown in the drawing, the curtain airbag includes a cushion **10** that ranges over a certain section along the interior side of a roof rail **1,** car body fastening parts such as a cushion holder **11** for fixing the cushion to the roof rail **1,** a gas injecting member **20** (a fill hose or a diffuser) having gas discharge ports and which is installed in the cushion **10,** and an inflator unit **30** which is connected to one end of the gas injecting member **20.** The gas injecting member **20** has a shape of tube or pipe, and a plurality of gas discharge ports (openings) **21** which are arranged at regular intervals are formed along one side of the outer surface. The cushion **10** is opened onto the gas discharge ports **21,** and seals the surroundings of the gas injecting member **20** with a certain area. The inflator unit **30** is opened onto one end of the gas injecting member **20,** and the joint part is firmly sealed by being wrapped in the cushion **10** and tightened with a clamp **31.** Furthermore, the inflator unit **30** is electronically connected with a sensor for detecting collision of a car. Meanwhile, a tether **40** which is supported by a front pillar and guides the cushion **10** to be widely spread in the directions of top and bottom, or left and right, when the cushion **10** is unfolded is connected to one end of the cushion. According to this, when a signal is detected by the sensor when a car collides side-on, an operating gas generated from the inflator unit **30** is vented into the gas injecting member **20,** and the vented gas is injected into the cushion **10** via the gas discharge ports **21** of the gas injecting member **20** and expands the cushion **10** to a certain area.

As disclosed above, the airbag cushion being used in a car is prepared into a certain shape and installed in a steering wheel, at side glass windows, or in side pillars of a car in a folded form to minimize volume, and when the car collides, the airbag cushion is expanded by providing a gas from the inflator into the cushion for protecting the driver and the passengers.

Therefore, studies for developing a member for injecting a gas having superior mechanical properties, air-tight effect, and folding property are needed for improving the folding property and the packing property of the airbag cushion, maintaining the properties, and demonstrating superior unfolding performance of the airbag effectively, namely, so that the inflator gas is effectively delivered to the airbag cushion,

**SUMMARY OF THE INVENTION**

It is an aspect of the present invention to provide a tube-type fabric substrate for introducing gas into an airbag having a superior mechanical property and air-tightening effect, for improving and maintaining the folding property and the packing property of the airbag cushion effectively, and demonstrating superior unfolding performance of the airbag by uniformly spreading the inflator gas to the cushion when the airbag operates.

It is another aspect of the present invention to provide a method of preparing the tube-type fabric substrate for introducing gas into an airbag.

It is still another aspect of the present invention to provide an airbag system including the tube-type fabric substrate for introducing gas into an airbag.

The present invention provides a tube-type fabric substrate for introducing gas into an airbag, including a tube-type fabric layer at which one or more gas discharge ports are formed, wherein the fabric layer is formed of a weave selected from the group consisting of a double-layered fabric weave, a basket weave, a co-woven fabric weave, a partially co-woven fabric weave, and a mixed weave thereof, and the weight per area of the fabric layer is 10 $g/mm^2$ or less.

The present invention also provides a method of preparing the tube-type fabric substrate for introducing gas into an airbag, including the steps of: weaving a fabric layer into a weave selected from the group consisting of a double-layered fabric weave, a basket weave, a co-woven fabric weave, a partially co-woven fabric weave, and a mixed weave thereof; and cutting and sew-binding the fabric layer to form a tube shape at which one or more gas discharge ports are formed.

The present invention also provides an airbag system including the tube-type fabric substrate for introducing gas into an airbag.

## BRIEF DESCRIPTION OF THE DRAWINGS

Fig. 1 is a schematic drawing showing the curtain-type airbag system according to one embodiment of the present invention.

Fig. 2 is a schematic drawing showing the tube-type fabric substrate for introducing gas into an airbag according to one embodiment of the present invention.

## DETAILED DESCRIPTION OF THE EMBODIMENTS

Hereinafter, a tube-type fabric substrate for introducing gas into an airbag, a method of preparing the same, and an airbag system including the same according to embodiments of the present invention are explained in more detail. However, these are just provided as specific examples of the present invention, and it is obvious to a person skilled in the related art that various modifications and reforms can be carried out in the scope of the technical idea of the present invention, and it is reasonable that such modifications and reforms are also included in the annexed patent claims.

In addition, "include" or "comprise" means to include any components (or ingredients) without particular limitation unless there is no particular mention about them in this description, and it cannot be interpreted as a meaning of excluding an addition of other components (or ingredients).

In the present invention, "the tube-type fabric substrate for introducing gas into an airbag" means equipment made of a fabric for delivering the inflator gas into the airbag cushion and expanding the cushion effectively when the airbag operates. Such equipment is connected to the inflator unit of the airbag module and installed in the airbag cushion, and has a shape of a tube or pipe having one or more gas discharge ports so as to inject a gas into the airbag cushion.

Particularly, the member for injecting a gas must be superior in mechanical properties such as heat-resistance and tensile strength because the member needs to inject a high pressure high temperature gas from the inflator to the airbag cushion, and the fabric layer except the gas discharge ports must have an air-tight effect, that is air-tightness, so that the airbag cushion is effectively uniformly expanded.

Therefore, prior airbag cushions have used a product prepared by weaving a hose-type fabric with a circular loom and coating the inside with a rubber hose as the equipment for delivering the inflator gas to the cushion. However, in the case of coating with the additional rubber hose, there are disadvantages in that the packing property decreases remarkably when it is installed in a car, the folding property of the airbag cushion including the same is not good, and the total car weight may be increased.

According to experiments of the present inventors, it is revealed that the tube-type fabric substrate for introducing gas into an airbag shows more improved folding property, mechanical property, and air-tightness since it is prepared by weaving a fabric layer into a weave having certain characteristics and classifying the weight per area of the fabric layer into a certain range, and not only can a better packing property be secured when the airbag including the same is installed in a car, but also superior unfolding performance and improved stability can be secured when the airbag operates.

Particularly, the tube-type fabric substrate for introducing gas into an airbag can provide a good folding property to the airbag including the same, and can achieve a good packing property and weight lightening of the total airbag system when it is installed in a car, because the tube-type fabric substrate for introducing gas into an airbag can secure a superior mechanical property and air-tightening effect that are sufficient to withstand high pressure high temperature gas of the inflator without inserting or coating an additional rubber hose.

According to one embodiment of the present invention, a tube-type fabric substrate for introducing gas into an airbag having a certain property is provided. The tube-type fabric substrate for introducing gas into an airbag includes a tube-type fabric layer at which one or more gas discharge ports are formed, wherein the fabric layer is formed of a weave selected from the group consisting of a double-layered fabric weave, a basket weave, a co-woven fabric weave, a partially co-woven fabric weave, and a mixed weave thereof, and the weight per area of the fabric layer may be 10 g/mm$^2$ or less.

The tube-type fabric substrate for introducing gas into an airbag is **characterized in that** it can withstand without damage such as rupture in high pressure high temperature condition even without coating an additional rubber hose, by using a matrix organization having improved mechanical properties such as tensile strength and tearing strength, for example, a fabric layer woven into a double-layered fabric weave, a basket weave, a co-woven fabric weave, a partially co-woven fabric weave, and a mixed weave thereof.

Here, "double-layered fabric weave" means a weave structure having two separate plain weave layers formed through a weave design and a weaving process for the fabric. Also, "basket weave" means a weave structure in which warps and wefts of same number cross each other, and for example, there may be a 1x1 weave, a 2x2 weave, a 3x3 weave, and the like. Further, "co-woven fabric weave" means a weave structure in which each warp or weft of an upper weave layer and a lower weave layer in a fabric layer having two separate plain weave layers like the double-layered fabric weave forms a weaving point so that the two fabric layers form one layer, namely, it means a weave structure forming such binding. For example, a single weave may be included in the co-woven fabric weave. Furthermore, "partially co-woven fabric weave" means a weave structure in which a double-layered fabric weave and a co-woven fabric weave are partially bound, and forms discontinuous bound parts in binding two separate fabric layers.

Specifically, the tube-type fabric substrate for introducing gas into an airbag of the present invention includes a fabric layer woven into a weave selected from the group consisting of a double-layered fabric weave, a basket weave, a co-woven fabric weave, a partially co-woven fabric weave, and a mixed weave thereof, and the fabric layer is preferably woven into a mixed weave of a double-layered fabric weave and a co-woven fabric weave or a partially co-woven fabric weave. The tube-type fabric substrate for introducing gas into an airbag may use a mixed weave of weave layers having different weave structures in parts as occasion demands, and may use a single fabric layer or a multiple fabric layer.

Further, since the tube-type fabric substrate for introducing gas into an airbag can be prepared by optimizing the weaving structure of the fabric into a certain range without needing additional rubber hose insertion or coating as disclosed above, the tube-type fabric substrate may be easily prepared according to a common method for preparing a fabric, for example, according to weaving, finishing, cutting, and sew binding processes, without using a special device like a circular loom so as to weave a hose type fabric. Particularly, the case of using a prior circular loom and the like for preparing the hose type fabric has a difficulty in responding to minute changes of design corresponding to various specifications of the airbag cushion, however, the tube-type fabric substrate of the present invention can much more easily respond to minute changes of design because it is woven and finished in a fabric shape and can be easily cut and sewn into a desired shape.

The tube-type fabric substrate for introducing gas into an airbag of the present invention can be prepared into various shapes, for example, a straight type, a Y type, an H type, and the like. The tube-type fabric substrate for introducing gas into an airbag of the present invention can be prepared into various shapes according to the position of the inflator. Specifically, the tube-type fabric substrate can be prepared into various shapes in the aspects of minimizing the risk of the initial unfolding part of the fabric member closely contacting to the inflator bursting when it is exposed to high pressure high temperature gas, and more effectively providing the inflator gas to the airbag cushion. For example, the straight pipe type fabric may be effectively used to the prior A pillar type or C pillar type inflator, and the Y type or H type fabric may be more effectively used with the B pillar type inflator. Furthermore, the tube-type fabric substrate for introducing gas into an airbag may be prepared into a tube type of which one end and the other end are open, or a tube type of which one end is open and the other end is closed. At this time, in the case of the tube type of which one end is open and the other end is closed, the inflator gas can be more effectively spread into the cushion when the airbag operates, and can exhibit superior airbag unfolding performance.

Furthermore, the weight per area of the fabric layer may be 10.0 g/mm$^2$ or less or 0.5 to 10.0 g/mm$^2$, preferably 9.0 g/mm$^2$ or less or 1.0 to 9.0 g/mm$^2$, and more preferably 7.5 g/mm$^2$ or less or 1.5 to 7.5 g/mm$^2$ in the tube-type fabric substrate for introducing gas into an airbag. The weight per area of the fabric layer may be 10.0 g/mm$^2$ or less in the aspects of improving the performance and the safety of the airbag with the optimized fabric weaving structure and achieving superior packing and folding properties in the storage space for the airbag cushion at the same time.

The fabric layer of the tube-type fabric substrate for introducing gas into an airbag may be made of any synthetic fiber which is generally known for the airbag cushion, and specifically, it may be prepared by using one or more synthetic fibers selected from the group consisting of a nylon-based fiber, a polyester-based fiber, and a polyolefin-based fiber. Among them, it is more preferable that the fabric is prepared by using a nylon-based fiber, in the aspects of heat-resistance and mechanical properties against high pressure high temperature gas.

The synthetic fiber having the fineness of 210 to 1050 denier, preferably 240 to 840 denier, more preferably 315 to 630 denier may be used, and it is preferable to use the synthetic fiber having the fineness of 210 denier or more in the aspect of the strength of the fabric, while it is also preferable to use the synthetic fiber having the fineness of 1050 denier or less in the aspect of the thickness of the fabric. The denier is a unit representing the fineness of fiber, when the weight of fiber having length of 9000 m is 1 g, it is denoted by 1 denier. Furthermore, the synthetic fiber may have a number of filaments of 50 to 500, tensile strength of 7.0 g/d or more or 7.0 to 11.0 g/d, and a thermal shrinkage rate of 3% or less.

Furthermore, the synthetic fiber may be woven with weaving density of warp and weft, namely, warp weaving density and weft weaving density, of 38 yarns/inch or more or 38 to 60 yarns/inch, and preferably of 41 yarns/inch or more or 41 to 57 yarns/inch respectively. The synthetic fiber may be woven with high weaving density of 38 yarns/inch or more in the aspect of achieving superior air-tightening effect against the inflator gas when the airbag operates.

In the tube-type fabric substrate for introducing gas into an airbag of the present invention, particularly the fabric layer woven by using the synthetic fiber having the fineness of 315 to 630 denier with weaving density of warp and weft of 38 yarns/inch or more may be used in the aspect of securing superior mechanical property, air-tightness, and folding property at the same time when it is applied in the airbag cushion.

As disclosed above, the tube-type fabric substrate for introducing gas into an airbag of the present invention may be composed of a matrix weave of which the mechanical properties such as tensile strength and tearing strength are improved, for example, a single fabric layer woven into a double-layered fabric weave. At this time, the single fabric layer means the fabric layer including or not including a coated resin layer, and is not coated with additional rubber hose. When the single fabric layer is used, it is possible to give more preferable characteristics in the aspect of the folding property and the packing property of the airbag cushion including the same.

The tube-type fabric substrate for introducing gas into an airbag may also include a resin layer coated on the surface, namely, one side or both sides, of the fabric layer to improve the heat-resistance and the mechanical property against high pressure high temperature gas and reduce the air-permeability a little more. The coated resin layer may include a silicone resin, a urethane resin, or a mixture thereof.

The coating amount per unit area of the resin layer may be 20 to 300 $g/m^2$, and preferably 20 to 200 $g/m^2$. Specifically, it is preferable that the coating amount is 30 $g/m^2$ to 200 $g/m^2$ when the fabric layer is woven into the double-layered fabric weave or the partially co-woven fabric weave, it is also preferable that the coating amount is 20 $g/m^2$ to 180 $g/m^2$ when the fabric layer is woven into the basket weave or the co-woven fabric weave.

In the tube-type fabric substrate for introducing gas into an airbag of the present invention, the thickness of the fabric layer may be 0.2 to 1.7 mm, preferably 0.25 to 1.5 mm, and more preferably 0.3 to 1.2 mm. The thickness of the fabric layer may be 0.2 mm or more in the aspect of maintaining the heat-resistance and mechanical property against high pressure high temperature gas, and it may be 1.7 mm or less in the aspect of the folding property of the fabric.

In the tube-type fabric substrate for introducing gas into an airbag of the present invention, the diameter of the tube may be 15 to 250 mm, preferably 18 to 200 mm, and more preferably 20 to 180 mm. It is preferable that the diameter of the tube is 15 mm or more in the aspect of maintaining the strength of the fabric against high pressure high temperature gas, and it is also preferable that the diameter is 250 mm or less in the aspect of maintaining the effective pressure for the gas injection.

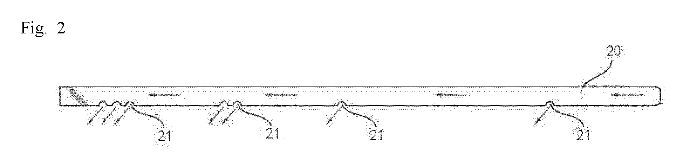

In more preferable embodiment of the present invention, a plurality of gas discharge ports **21** are successively formed along the length direction of the tube-type fabric substrate **20** for introducing gas into an airbag, as illustrated in Fig. 2.

The gas discharge ports are direct means for injecting the gas generated at the inflator from the tube-type fabric substrate into the airbag cushion, and the number and size of the ports may be controlled in the aspect of the tube-type fabric layer keeping an optimal pressure range for delivering the inflator gas to the airbag cushion uniformly and effectively. Specifically, the gas discharge ports may be formed between one open end and the other open end of the tube-type fabric, or between one open end and the closed other end of the fabric, according to various types of the tube-type fabric layer disclosed above.

However, in the case of a general curtain type airbag, the gas discharge ports may be formed with the number per unit length of 1 to 20 ea/m, preferably of 3 to 18 ea/m, and more preferably of 5 to 15 ea/m. The number of gas discharge ports of the fabric layer may be different according to the size of the gas discharge ports, however, it may be 1 ea/m or more in the aspect of maintaining the heat-resistance and the mechanical property of the fabric and in the aspect of the gas injection, and it may be 20 ea/m or less in the aspect of maintaining effective pressure.

It is more preferable that more and larger gas discharge ports are formed as the distance from the part connected with the inflator unit increases in the aspect of injecting the gas into the airbag cushion uniformly.

Furthermore, a reinforcing part may be formed around the gas discharge port so as to prevent the periphery of the port from being damaged when the gas is injected. At this time, the reinforcing part may be formed by coating an adhesive on the periphery of the gas discharge port, cutting off the hose wall with a laser beam at the same time as forming the gas discharge ports, or contacting direct heating means around the gas discharge ports.

The tube-type fabric substrate for introducing gas into an airbag of the present invention can have superior tensile strength and tearing strength by weaving the fabric layer into a double-layered fabric weave, a basket weave, a co-woven fabric weave, a partially co-woven fabric weave, and a mixed weave thereof as disclosed above, and can include a high strength sewn junction part which can withstand high pressure high temperature gas when the fabric layer is formed into the tube type.

As disclosed above, in the tube-type fabric substrate for introducing gas into an airbag of the present invention, the fabric layer may include a sewn junction part for forming the tube shape, and it is possible to apply the sewn junction to one end or the other end of the fabric layer so as to form a closed tube type as occasion demands. At this time, other bonding methods using an adhesive, fusion bonding by electricity and heat, and the like may be additionally applied to the junction part.

The seam strength of the junction part measured according to the American Society for Testing and Materials (ASTM) D 5822 method may be 1500 N or more or 1500 to 3000 N, and preferably 1800 N or more or 1800 to 2500 N. At this time, it is preferable that the seam strength of the junction part is 1500 N or more in the aspect of the burst protection against the expansive force of high pressure high temperature gas generated from the inflator, and it is also preferable that the seam strength is 3000 N or less in the aspect of protecting the fabric layer from damage.

The junction part may use a sewing fiber including at least one selected from the group consisting of a nylon-based fiber, a polyester-based fiber, and an aramid-based fiber, and it is more preferable to use a sewing fiber such as nylon 66, nylon 46, Kevlar (aramid-based fiber), and the like in the aspect of heat-resistance and shrinkage, and most preferably, nylon 66 may be used.

The fineness of the sewing fiber may be 420 to 1890 denier, and preferably 840 to 1260 denier, and it is preferable that the fineness of the sewing fiber is 420 denier or more in the aspect of the strength, and it is preferable that the fineness is 1890 denier or less in the aspect of resilience (elasticity).

The sewn part may be sewn so that the number of stitches is 30 to 55 ea/100mm, and preferably 35 to 40 ea/100mm. At this time, when the number of stitches of the sewn part is less than 30 ea/100mm, there is a problem of that the strength of the sewn part is too weak and the sewn part of the car body fastening part may burst while assembling the airbag, and when it is larger than 50 ea/100mm, the efficiency of the sewing decreases and there may be a problem of a sewing defect.

The present invention can provide the tube-type fabric substrate for injecting airbag gas which can effectively inject high pressure high temperature gas generated from the inflator into the airbag and has a superior folding property, flexibility, and packing property, by securing a superior mechanical property of the fabric layer itself by optimizing the fabric weave as disclosed above, and additionally by making the sewn junction part maintain high strength.

In the tube-type fabric substrate for injecting airbag gas of the present invention, the tensile strength of the fabric layer measured according to the ASTM D 5034 method may be 2000 N/5cm or more or 2000 to 9000 N/5cm, and preferably 3500 N/5cm or more or 3500 to 6000 N/5cm. The tensile strength may be 2000 N/5cm or more in the aspect of the burst protection against the expansive force of high pressure high temperature gas generated from the inflator, and it may be 9000 N/5cm or less in the aspect of considering the folding property of the fabric layer.

Furthermore, the fabric layer requires a superior level of tearing strength because high pressure high temperature gas is rapidly injected into the fabric layer when the airbag operates, and when the tearing strength representing burst strength of the fabric layer is measured according to the Deutsche Industrienorm (DIN) 53356 method, it may be 90 N or more or 90 to 700 N, preferably 100 N or more or 100 to 480 N, and more preferably 120 N or more or 120 to 400 N. Here, when the value is less than 90 N, the fabric layer may burst when the airbag operates and it may cause a large danger in function of the airbag.

The stiffness of the fabric layer measured according to the ASTM D 4032 method at room temperature may be 0.5 to 15.0 kgf, and preferably 1.0 to 10.0 kgf. Specifically, it may be 15.0 kgf or less when the fineness is 630 denier or more, and it may be 10.0 kgf or less when the fineness is less than 420 denier.

In order to install the tube-type fabric substrate for injecting airbag gas of the present invention into an airbag system, it is preferable to maintain said stiffness range, and when the stiffness is too low such as less than 0.5 kgf, it may not perform a sufficient support and protection function against the high pressure high temperature gas when the airbag operates, and the shape maintaining property decreases and the packing property may be deteriorated when it is installed in a car. Furthermore, in order to prevent the fabric from becoming too stiff and difficult to fold and the packing property from decreasing, and in order to prevent discoloration of the fabric member, it is preferable that the stiffness is 15.0 kgf or less, and specifically, it is preferable that the stiffness is 10.0 kgf or less when the fineness is less than 420 denier, and 15.0 kgf or less when the fineness is 630 denier or more.

The air permeability of the fabric layer measured according to the ASTM D 737 method at room temperature may be 10.0 $1/dm^2/min$ or less or 0 to 10.0 $1/dm^2/min$. Specifically, the air permeability of the fabric layer can be remarkably decreased by coating a resin layer on the fabric layer, and air permeability of nearly 0 $1/dm^2/min$ can be obtained. However, when the resin layer is not coated, the air permeability of the uncoated fabric layer of the present invention measured according to the ASTM D 737 method at room temperature may be 0.5 to 10.0 $1/dm^2/min$, and preferably 0.5 to 1.5 $1/dm^2/min$. At this time, when the air permeability is over 10.0 $1/dm^2/min$, specifically over 3.5 $1/dm^2/min$, it may not be preferable in the aspect of maintaining the air-tightness of the fabric layer.

Furthermore, the shrinkage rates of the fabric layer in the warp direction and the weft direction measured according to the ASTM D 1776 method are 2% or less, preferably 1.5% or less, and more preferably 1.0% or less, respectively. Here, it is preferable that the shrinkage rates of the fabric layer in the warp direction and the weft direction are not in excess of 2.0% in the aspect of maintaining the shape stability and the heat-resistance of the fabric member.

Furthermore, it may be very important in the tube-type fabric substrate for injecting airbag gas of the present invention for the air-tightness that the fabric withstands the tensile force by high pressure air and the elongation is minimized, and preferably, the air-tightness of the tube-type fabric substrate can be better by the high density weaving of which the cover factor (CF) of single side of the fabric layer represented by the following Calculation Formula 1 is 1800 or more. When the cover factor is less than 1800, there may be a problem that the air leaks easily when the high pressure high temperature air is generated from the inflator.

Calculation Formula 1

$$\text{Cover Factor (CF)} = \text{warp density (yarns/inch)} \times \sqrt{(\text{warp denier})} + \text{weft density (yarns/inch)} \times \sqrt{(\text{weft denier})}$$

The self-extinguishment rate of the fabric layer measured according to heat-resistance evaluating method of FMVSS 302 is preferably 80% to 100%, and the self extinguishment is preferably 0 to 80 mm/min. At this time, the burning length of the specimens taken in the directions of warp, weft, and $\pm 45°$ is 80 mm or less, and the average burning time must be 60 seconds or less.

In the tube-type fabric substrate for injecting airbag gas according to the present invention, the heat-resistance of the fabric layer is evaluated according to the self extinguishment or the self-extinguishment rate. When 100 specimens taken from the fabric in the directions of warp, weft, and $\pm 45°$ are exposed to a natural gas flame of a 38 mm height or a heat source having an equivalent caloric value for 15 seconds according to the FMVSS 302 method, when burning length is 80 mm or less and burning time is 60 seconds or less, it is denoted as self-extinguishing (SE), and the percentage of specimens satisfying the above standard of self-extinguishment among said 100 specimens is denoted by the self-extinguishment rate. The self-extinguishment rate is represented by Calculation Formula 2.

Calculation Formula 2

$$\text{Self-extinguishment rate (\%)} = (\text{Number of specimens satisfying the self-extinguishment}) / (\text{Number of specimens to be evaluated}) \times 100$$

Meanwhile, according to another embodiment of the present invention, a method of preparing the tube-type fabric substrate for introducing gas into an airbag is provided. Specifically, the tube-type fabric substrate may be prepared by the method of weaving a fabric layer having the specific weave structure disclosed above, and cutting and sew-binding the fabric layer to form a tube shape.

The method of preparing the tube-type fabric substrate for introducing gas into an airbag includes the steps of weaving a fabric layer into a weave selected from the group consisting of a double-layered fabric weave, a basket weave, a co-woven fabric weave, a partially co-woven fabric weave, and a mixed weave thereof; and cutting and sew-binding the fabric layer to form a tube shape at which one or more gas discharge ports are formed.

The fabric layer of the present invention may be treated according to a common method known as a preparation method of fabric except that the fabric layer is woven into the specific weave structure. For example, the final fabric layer for introducing gas into an airbag may be prepared through common weaving methods which can weave the fabric layer into the weave selected from the group consisting of a double-layered fabric weave, a basket weave, a co-woven fabric weave, a partially co-woven fabric weave, and a mixed weave thereof, a scouring process, and a tentering process. The fabric layer prepared as disclosed above may be cut and sew-bound to form a tube shape at which one or more gas discharge ports are formed.

Particularly, the fabric layer may be prepared through beaming, weaving, scouring, and tentering processes by using one or more synthetic fibers selected from the group consisting of a nylon-based fiber, a polyester-based fiber, and a polyolefin-based fiber as wefts and warps. The fabric layer may be prepared by using a common weaving machine, and the weaving machine is not limited to a specific one. However, the fabric layer of a plain weave may be prepared by using a rapier loom, an air jet loom, a water jet loom, and the like, and the fabric layer of a one piece woven (OPW) type may be prepared by using a Jacquard loom. Here, considering that the fabric layer in the tube-type fabric substrate for injecting airbag gas of the present invention is woven into a double-layered fabric weave, a basket weave, a co-woven fabric weave, a partially co-woven fabric weave, a mixed weave thereof, and the like, it is more preferable to use a Jacquard loom.

Furthermore, according to still another embodiment of the present invention, an airbag system including the tube-type fabric substrate for introducing gas into an airbag is provided. The airbag system may be equipped with common devices that are well known to a person skilled in the related art. The airbag may be largely classified into a frontal airbag and a side curtain airbag. There are airbags for a driver's seat, for a passenger seat, for protecting knees, for protecting ankles, and the like as the frontal airbag, and the side curtain type airbag protects passengers when a car collides side-on or turns over. Therefore, the airbag of the present invention includes both of the frontal airbag and the side curtain airbag.

Matters that are not disclosed above may be added to or subtracted from the present invention, and thus they are not particularly limited in the present invention.

According to the present invention, the tube-type fabric substrate for introducing gas into an airbag having not only a superior mechanical property and air-tightening effect but also superior flexibility and folding property in the airbag cushion is provided by optimizing the weave structure and the weight per area to a certain range.

Since the tube-type fabric substrate for introducing gas into an airbag is superior in the mechanical property and air-tightening effect and can secure a superior folding property and flexibility at the same time, a good packing property and weight lightening can be obtained when it is used for an airbag cushion, the inflator gas evenly spreads into the cushion, and it becomes possible to exhibit superior airbag unfolding performance and to improve the safety of occupants.

Therefore, the tube-type fabric substrate for introducing gas into an airbag can be very preferably used for preparing an airbag for a car.

Hereinafter, preferable examples and comparative examples are presented for understanding the present invention. However, the following examples are only for illustrating the present invention and the present invention is not limited to or by them.

## Examples 1~5

After weaving the fabric layer of the tube-type fabric substrate for introducing gas into an airbag into a mixed weave of a double-layered fabric weave and a co-woven fabric weave, or a basket weave by using nylon-based synthetic fibers with a Jacquard loom, a scouring process and a tentering process were carried out. After that, the fabric layer coated with silicone was prepared by coating liquefied silicone rubber (LSR) resin on the fabric layer with a knife over roll coating method.

At this time, the specific kind of synthetic fiber, the fineness, the number of filaments, the properties such as tensile strength, the weaving density, the weaving type, the component of coated resin, the amount of coated resin, the thickness of fabric layer, the diameter of tube, the number of gas discharge ports per unit length, and the weight per area of fabric layer were the same as in the following Table 1, and the other conditions followed common conditions for preparing a fabric member for introducing gas into an airbag or a fabric for an airbag.

[Table 1]

| Classifications | Example 1 | Example 2 | Example 3 | Example 4 | Example 5 |
|---|---|---|---|---|---|
| Kind of Fiber | Nylon 66 | Nylon 66 | Nylon 66 | Nylon 66 | Nylon 66 |
| Total Fineness (de) | 420 | 420 | 420 | 420 | 630 |
| Number of Filaments | 68 | 68 | 68 | 136 | 105 |
| Tensile Strength of Fiber (g/d) | 9.3 | 9.3 | 9.3 | 9.0 | 8.8 |
| Elongation at Break of Fiber (%) | 21 | 21 | 21 | 24 | 22 |
| Thermal Shrinkage Rate of Fiber (%) | 6.0 | 6.0 | 6.0 | 6.8 | 6.5 |
| Weaving Density (warp×weft) | 57x49(2) | 57x49(2) | 57x49(2) | 57x57 | 41x41 |

(continued)

| Classifications | Example 1 | Example 2 | Example 3 | Example 4 | Example 5 |
|---|---|---|---|---|---|
| Weaving Type | Double-weave/ Co-woven fabric weave | Double-layered fabric layered fabric weave/ Co-woven fabric weave | Double-layered fabric weave/ Co-woven fabric weave | Basket Weave (1x1) | Basket Weave (1x1) |
| Component of Coated Resin | - | Liquefied Silicone | Liquefied Silicone | Liquefied Silicone | Liquefied Silicone |
| Coating Amount of Resin (g/m²) | - | 70 | 195 | 30 | 50 |
| Thickness of Fabric Layer (mm) | 0.7 | 0.7 | 0.8 | 0.4 | 0.5 |
| Diameter of Tube (mm) | 45 | 45 | 45 | 45 | 45 |
| Number of Gas Discharge ports per Unit Length (ea/m) | 6 | 6 | 6 | 6 | 6 |
| Weight per area (g/mm²) | 4.61 | 5.23 | 6.72 | 2.40 | 2.45 |
| Cover Factor | 4345 | 4345 | 4345 | 2336 | 2058 |

In Table 1, the tube-type fabric members of Examples 1~5 were randomly cut into 10 specimens of 10mm×10mm to not include the discharge ports and the specimens were weighed, and the weight per area of fabric (g/mm²) was obtained by dividing the average weight of the specimens by unit area.

## Comparative Example 1

After weaving a fabric hose by using a polyester fiber of 3000 denier with a circular loom according to a prior technique for preparing a fill hose, a fill hose was prepared by inserting a circular EPDM rubber hose in the fabric hose, binding the fabric hose and the rubber hose together by carrying out a coating process, and cutting the hose with an auto-cutting machine to form the gas discharge ports.

At this time, the weight per area of the fill hose was measured by cutting specimens of the fill hose according to the same method as the tube-type fabric members of Examples 1~5, and the weight per area of the rubber hose binding type fill hose according to Comparative Example 1 was measured as 14.2 g/mm².

## Comparative Example 2

After weaving a fabric hose by using a polyester fiber of 3000 denier with a circular loom according to a prior technique for preparing a fill hose, a fill hose was prepared by cutting the hose with an auto-cutting machine to form the gas discharge ports without a coating process.

At this time, the weight per area of the fill hose was measured by cutting specimens of the fill hose according to the same method as the tube-type fabric members of Examples 1~5, and the weight per area of the rubber hose binding type fill hose according to Comparative Example 2 was measured as 11.1 g/mm².

## Experimental Example 1

The properties of the tube-type fabric members for introducing gas into an airbag prepared according to Examples 1~5 and the fill hoses of Comparative Examples 1~2 were measured according to the following methods, and the measured properties are listed in the following Table 2.

**(a) Tearing Strength**

The tearing strength of the tube-type fabric members and the fill hoses was measured according to the Deutsche Industrienorm (DIN) 53356 method. After cutting a specimen from the tube-type fabric members and the fill hoses, 7 cm was incised in each specimen in the directions of warp or weft, and the left side and the right side of the incised part of the specimen were fixed to clamps of a device for measuring the tearing strength. The specimen was torn and the strength was measured by cross-moving the clamps upwardly and downwardly while the specimen was fixed to the clamps.

**(b) Tensile Strength and Elongation at Break**

The specimen was cut from the tube-type fabric members and the fill hoses, and fixed at the lower clamp of the testing machine for measuring the tensile strength according to ASTM D 5034, and the strength and the elongation at the time when the specimen was broken were measured while moving the upper clamp that holds the upper part of the specimen upwardly.

**(c) Shrinkage Rates in the Directions of Warp and Weft**

The shrinkage rates in the directions of warp and weft were measured according to ASTM D 1776. First, the specimen was cut from the tube-type fabric members and the fill hoses, the specimen was marked to indicate 20 cm that is the length before shrinkage in each direction of warp and weft and heat-treated at 149°C for 1 hour, and the shrinkage rates {(Length before contraction - Length after contraction) / Length before contraction x 100%} in the directions of warp and weft were calculated from the length of the specimen after shrinkage.

**(d) Stiffness**

The stiffness of the tube-type fabric members and the fill hoses was measured by using the testing machine for measuring the stiffness according to ASTM D 4032 with a circular bend method. Furthermore, it is possible to use a cantilever method as the method for measuring the stiffness, and it is also possible to measure the stiffness by measuring the bending length of the fabric by using a cantilever measuring device that is a testing apparatus having a slope of a certain angle for imparting the specimen cut from the tube-type fabric members and the fill hoses with a bend.

**(e) Thickness**

The thickness of a single side of the fabric layer of the tube-type fabric members of Examples 1~5 was measured according to ASTM D 1777, and the thickness of the single side corresponding to the fabric layer was measured in the fill hoses of Comparative Examples 1~2.

**(f) Heat-Resistance and Flame-Retardancy**

After randomly taking 100 specimens of 100mm×355mm from the tube-type fabric members and the fill hoses, the heat-resistance was evaluated by exposing the specimens to a natural gas flame of a 38 mm height or a heat source having an equivalent caloric value for 15 seconds according to the FMVSS 302 method.
When the prepared specimen was exposed to the heat source and the heat source was eliminated after 15 seconds, it was denoted as self-extinguishing (SE) when the burning length was 80 mm or less and burning time was 60 seconds or less, the percentage of specimens satisfying above standard of self-extinguishment among 100 specimens was denoted by the self-extinguishment rate, and the self-extinguishment rate was calculated according to the following Calculation Formula 2.

Calculation Formula 2
Self-extinguishment rate (%) = (Number of specimens satisfying the self-extinguishment) / (Number of specimens to be evaluated) ×100

**(g) Air Permeability**

After storing the tube-type fabric members and the fill hoses at the condition of 20 °C and 65 %RH for 1 day or more according to ASTM D 737, the pressure air of 125 Pa was applied to a circular cross-section of 38 cm$^2$, and the amount of air that passed through the cross-section was measured.

**(h) Seam Strength of Junction Part**

After cutting specimens of the junction part from the tube-type fabric members and the fill hoses, the specimen was fixed to a lower clamp of a device for measuring seam strength according to ASTM D 5822, and the strength and the elongation when the specimen of the junction part was broken were measured while moving an upper clamp upwardly. At this time, the seam strength of the junction part was measured after positioning the seam part at center.

[Table 2]

| Classifications | | Example 1 | Example 2 | Example 3 | Example 4 | Example 5 | Comparative Example 1 | Comparative Example 2 |
|---|---|---|---|---|---|---|---|---|
| Tearing Strength (N) | | 311 | 323 | 381 | 149 | 515 | 839 | 684 |
| Tensile Strength (N/5cm) | | 4871 | 4895 | 5622 | 3297 | 3884 | 3836 | 3761 |
| Elongation at Break (%) | | 32.5 | 38.8 | 38.3 | 33.0 | 35.0 | 32.3 | 6.9 |
| Shrinkage Rate of Fabric (%) | Warp | 0.4 | 0.3 | 0.4 | 0.3 | 0.3 | 0.4 | 1.1 |
| | Weft | 0.2 | 0.2 | 0.2 | 0.3 | 0.4 | 0.5 | 1.3 |
| Stiffness (kgf) | | 10.3 | 9.9 | 9.8 | 1.0 | 1.3 | 24.5 | 16.8 |
| Thickness (mm) | | 0.639 | 0.690 | 0.781 | 0.350 | 0.380 | 2.090 | 1.850 |
| Self-Extinguish Rate (%) | | 100 | 100 | 100 | 100 | 100 | 100 | 100 |
| Self-Extinguishment | | SE | SE | SE | SE | SE | SE | SE |
| Air-Permeability (l/dm$^2$/min) | | 3.2 | 0 | 0 | 0 | 0 | 0 | 4.1 |
| Seam Strength (N/5cm) | | 2175 | 2250 | 2417 | 1670 | 1750 | - | - |

As shown in Table 2, the tube-type fabric members for introducing gas into an airbag of Examples 1~3 including the fabric layer woven into a mixed weave of a double-layered fabric weave and a co-woven fabric weave according to the present invention have the weight per area of 4.61 to 6.72 g/mm$^2$ which is remarkably lighter than existing fill hoses, and the shrinkage rates in the directions of warp and weft of 0.2% to 0.4%, and thus it can be recognized that they have very superior characteristics. At the same time, the tube-type fabric members for introducing gas into an airbag of Examples 1~3 have the stiffness of 9.8 to 10.3 kgf and the thickness of 0.639 to 0.781 mm, and thus it can be recognized that they have a good folding property and packing property in addition to the superior mechanical property.

Furthermore, the tube-type fabric members for introducing gas into an airbag of Examples 4~5 including the fabric layer woven in a form of basket weave according to the present invention have the weight per area of 2.40 to 2.45 g/mm$^2$ which is remarkably lighter than existing fill hoses, the stiffness of 1.0 to 1.3 kgf, and the thickness of 0.350 to 0.380 mm, and thus it can be recognized that they have superior characteristics in folding property and packing property.

Meanwhile, the fill hose of Comparative Example 1 including a fabric hose woven by a circular loom according to prior method and a rubber hose inserted in the fabric hose, and the fill hose of Comparative Example 2 not including the rubber hose, have the weight per area of 14.2 g/mm$^2$ and 11.1 g/mm$^2$ respectively, and thus it can be recognized that they are remarkably heavier than the fill hoses of Examples 1~3 and both the stiffness and the thickness of the fabric layer are higher than the fabric members of Examples 1~3. From this, it can be recognized that the fill hoses of Comparative Examples 1 and 2 are apparently poor in the folding property and the packing property when they are applied to an airbag system, and there is a problem in the weight lightening and the performance improvement of the airbag system. Particularly, if the additional rubber hose is not inserted into the fabric hose woven by a circular loom as in the case of Comparative Example 2, there may be a problem that the fill hose itself is damaged by high pressure high temperature inflator gas when the airbag actually operates because it is difficult to apply the coated resin layer as in Examples 2~5.

While the present invention has been described in detail with reference to the preferred embodiments, those skilled in the art will appreciate that various modifications and substitutions can be made thereto without departing from the spirit and scope of the present invention as set forth in the appended claims.

**Claims**

1. A tube-type fabric substrate for introducing gas into an airbag, comprising:

   a tube-type fabric layer having one or more gas discharge ports,
   wherein the fabric layer is formed of a weave selected from the group consisting of a double-layered fabric weave, a basket weave, a co-woven fabric weave, a partially co-woven fabric weave, and a mixed weave thereof; and
   the weight per area of the fabric layer is 10 g/mm$^2$ or less.

2. The tube-type fabric substrate according to Claim 1, wherein the fabric layer is formed of a mixed weave of a double-layered fabric weave and a co-woven fabric weave or a partially co-woven fabric weave.

3. The tube-type fabric substrate according to Claim 1, wherein the fabric layer is made of one or more synthetic fibers selected from the group consisting of a nylon-based fiber, a polyester-based fiber, and a polyolefin-based fiber.

4. The tube-type fabric substrate according to Claim 3, wherein the fineness of the synthetic fiber is 210 to 1050 denier, the number of filaments is 50 to 500, the tensile strength is 7.0 g/d or more, and the thermal shrinkage rate is 3% or less.

5. The tube-type fabric substrate according to Claim 1, wherein the fabric layer is woven by using the synthetic fiber of which the fineness is 315 to 630 denier so that the weaving densities of warp and weft are 38 yarns/inch or more, respectively.

6. The tube-type fabric substrate according to Claim 1, which is composed of a single fabric layer.

7. The tube-type fabric substrate according to Claim 1, including a resin layer coated on the surface of the fabric layer.

8. The tube-type fabric substrate according to Claim 7, wherein the coated resin layer includes a silicone resin, a urethane resin, or a mixture thereof.

9. The tube-type fabric substrate according to Claim 7, wherein the coating amount per unit area of the resin layer is 20 to 300 g/m$^2$.

10. The tube-type fabric substrate according to Claim 1, wherein the thickness of the fabric layer is 0.2 to 1.7 mm.

11. The tube-type fabric substrate according to Claim 1, wherein the diameter of the tube of the fabric layer is 15 to 250 mm.

12. The tube-type fabric substrate according to Claim 1, wherein the number of gas discharge ports per unit length is 1 to 20 ea/m.

13. The tube-type fabric substrate according to Claim 1, wherein the tensile strength of the fabric layer measured according to the American Society for Testing and Materials (ASTM) D 5034 method is 2000 N/5cm or more.

14. The tube-type fabric substrate according to Claim 1, wherein the tearing strength of the fabric layer measured according to the Deutsche Industrienorm (DIN) 53356 method is 90 N or more.

15. The tube-type fabric substrate according to Claim 1, wherein the stiffness of the fabric layer measured according to ASTM D 4032 method is 0.5 to 15.0 kgf.

16. The tube-type fabric substrate according to Claim 1, wherein the air permeability of the fabric layer measured according to the ASTM D 737 method is 10.0 1/dm$^2$/min or less.

17. The tube-type fabric substrate according to Claim 1, wherein the shrinkage rates of the fabric layer in warp direction and weft direction measured according to the ASTM D 1776 method are 2% or less, respectively.

18. The tube-type fabric substrate according to Claim 1, wherein the cover factor (CF) value of the fabric layer represented by the following Calculation Formula 1 is 1800 or more:

$$\text{Calculation Formula 1}$$
$$\text{Cover Factor (CF)} = \text{warp density (yarns/inch)} \times \sqrt{(\text{warp denier})} + \text{weft density (yarns/inch)} \times \sqrt{(\text{weft denier})}.$$

19. The tube-type fabric substrate according to Claim 1, wherein a self-extinguishment rate of the fabric layer is 80% to 100%, a burning length is 80 mm or less, and an average burning time is 60 seconds or less, measured according to the heat-resistance evaluating method of FMVSS 302.

20. The tube-type fabric substrate according to Claim 1, wherein the fabric layer includes a sewn junction part to form the shape of a tube.

21. The tube-type fabric substrate according to Claim 20, wherein the seam strength of the junction part measured according to the ASTM D 5822 method is 1500 N or more.

22. The tube-type fabric substrate according to Claim 20, wherein the junction part is sewn by using a sewing fiber including at least one selected from the group consisting of a nylon-based fiber, a polyester-based fiber, and an aramid-based fiber.

23. The tube-type fabric substrate according to Claim 20, wherein the junction part is sewn by using a sewing fiber of which the fineness is 420 to 1890 denier.

24. The tube-type fabric substrate according to Claim 20, wherein the junction part is sewn so that the number of stitches of the sewn part is 30 to 55 ea/100mm.

25. A method of preparing the tube-type fabric substrate for introducing gas into an airbag according to any one of Claims 1 to 24, including the steps of:

weaving a fabric layer into a weave selected from the group consisting of a double-layered fabric weave, a basket weave, a co-woven fabric weave, a partially co-woven fabric weave, and a mixed weave thereof; and cutting and sew-binding the fabric layer to form a tube shape at which one or more gas discharge ports are formed.

26. An airbag system including the tube-type fabric substrate for introducing gas into an airbag according to any one of Claims 1 to 24.

27. The airbag system according to Claim 26, wherein the airbag is a frontal airbag, a side airbag, or a curtain airbag.

**Fig. 1**

Fig. 2